# EUROPÄISCHE PATENTSCHRIFT

(11) **EP 2 490 923 B1**
(45) Veröffentlichungstag und Bekanntmachung des Hinweises auf die Patenterteilung: **16.01.2019**
(21) Anmeldenummer: 10745611.3
(22) Anmeldetag: 23.08.2010
(51) Int. Cl.: B60S 1/04

(54) **SCHEIBENWISCHERVORRICHTUNG**
WINDSCREEN WIPER APPARATUS
DISPOSITIF D'ESSUIE-GLACES

(30) Priorität: 21.10.2009 DE 102009045879; 19.05.2010 DE 102010029105
(43) Veröffentlichungstag der Anmeldung: 29.08.2012
(73) Patentinhaber: Robert Bosch GmbH, 70442 Stuttgart (DE)
(72) Erfinder: MAI, Stefan, 76133 Karlsruhe (DE); HAUSER, Florian, 77855 Achern (DE); WEILER, Michael, 77833 Ottersweier (DE); KRAUS, Achim, 77815 Buehl (DE)
(86) Internationale Anmeldenummer: PCT/EP2010/062216
(87) Internationale Veröffentlichungsnummer: WO 2011/047905

(56) Entgegenhaltungen:
- EP-A1- 1 190 920
- EP-A2- 1 862 361
- DE-A1-102004 005 731
- FR-A1- 2 775 455
- FR-A1- 2 783 477

## Beschreibung

Die vorliegende Erfindung betrifft eine Scheibenwischervorrichtung für ein Kraftfahrzeug, mit einem Wischermotor und mit mindestens einem Wischerlager, in welchem eine Wischerwelle gelagert ist, die zur Betätigung eines mit der Wischerwelle verbundenen Wischerarmes mittels des Wischermotors antreibbar ist, wobei das Wischerlager einen Lagerzapfen zur Aufnahme eines rohrförmigen Trägers aufweist, der mittels einer Crimpung an dem rohrförmigen Träger fixierbar ist, sowie ein Verfahren zu deren Herstellung.

### Stand der Technik

Derartige Scheibenwischervorrichtungen sind allgemein bekannt. Während des Crimpvorgangs werden die miteinander zu fixierenden Bauteil einer sehr großen Verformungskraft ausgesetzt, um eine formschlüssige Verbindung zwischen dem Lagerzapfen und dem rohrförmigen Träger zu erzeugen. Neben dem rohrförmigen Träger werden dabei auch Bereiche des Materials des Lagerzapfens plastisch verformt, um eine entsprechend formschlüssige Verbindung zwischen dem rohrförmigen Träger und dem Lagerzapfen zu erzielen. Diese kann jedoch zur Folge haben, dass das Material des Lagerzapfens gerade im Bereich der Crimpung der Verbindungspartner sehr großen Spannungen ausgesetzt wird, was zu Beeinträchtigungen der Werkstoffstruktur bis hin zu einer Materialermüdung führen kann.

Zur Verringerung der beim Crimpen zur Gewährleistung einer formschlüssigen Verbindung zwischen Lagerzapfen und rohrfömigem Träger aufzubringenden Kraft wird im Stand der Technik vorgeschlagen, beispielsweise an zwei einander gegenüberliegenden Seitenbereichen des Lagerzapfens im Überschneidungsbereich mit dem daran aufzusteckenden und zu befestigenden rohrförmiger Träger Crimptaschen auszubilden, deren geometrische Abmessung im Wesentlichen den Abmessungen der Crimpwerkzeuge entsprechen. Nach Aufstecken des rohrförmigen Trägers werden die Crimpwerkzeuge betätigt, so dass Teilabschnitte des rohrförmigen Trägers in die Crimptaschen in dem Lagerzapfen hineinbewegt und zur Fixierung an dem Lagerzapfen plastisch verformt werden. Dazu wird der rohrförmige Träger, beispielsweise ein Stahlrohr, von außen über die Crimpwerkzeuge, insbesondere über deren Crimpstempel derart deformiert, dass er sich durch eine Art Tiefziehen in die Crimptaschen hineinbewegt wird und mit den Crimptaschen in dem Lagerzapfen eine formschlüssige Verbindung bildet.

Nachteilig an diesem Verfahren ist, dass aufgrund der plastischen Verformung des rohrförmigen Trägers gerade in den Randbereichen der Crimptaschen in dem Lagerzapfen eine sehr große Materialbeanspruchung des Lagerzapfens auftritt. Dies führt zu Spannungsspitzen, die zu Eigenspannungen in den jeweiligen Werkstücken oder gar zur einer Ermüdung des stark beanspruchten Materials des Lagerzapfens und gegebenenfalls sogar einen Ausbruch der Kantenbereiche der Crimptasche zur Folge haben kann. Ferner ist eine genaue Ausrichtung der Crimpwerkzeuge auf die Crimptaschen notwendig. Dies ist jedoch sehr schwer, da die am Lagerzapfen ausgebildeten Crimptaschen im montierten Zustand von Lagerzapfen und rohrförmigem Träger von außen nicht sichtbar sind.

Da das Material des rohrförmigen Trägers in der Regel Stahl ist und somit eine höhere Deformationskraft benötigt als das daran eingesetzte Material des Lagerzapfens, welcher in der Regel aus Aluminium, Zink oder Kunststoff hergestellt ist, kann während des Crimpvorgangs auch kein eindeutiger Kraftanstieg bei Deformation des Lagerzapfens gemessen werden. Ein kraftgesteuertes Crimpen aufgrund des unterschiedlichen Werkstoffverhaltens ist daher nur schwer möglich, so dass eine reine Wegsteuerung für den Crimpvorgang eingesetzt werden muss, was mit einem weiter erhöhten Risiko des Einbringens von Spannungsspitzen in den Lagerzapfen insbesondere bei zu großen Crimpkräften einhergeht.

Die EP 1 190 920 A1 und die FR 2 775 455 A1 zeigen gattungsgemäße Merkmale.

Es ist daher Aufgabe der vorliegenden Erfindung, eine Scheibenwischervorrichtung und ein Verbindungsverfahren bereitzustellen, die eine sichere formschlüssige Verbindung zwischen Lagerzapfen und rohrförmigem Träger auch bei verminderter Krafteinbringung und einfacher Handhabung bereitstellen und Spannungsspitzen in den Verbindungspartnern vermindert oder möglichst vermeiden.

### Offenbarung der Erfindung

Diese Aufgabe wird erfindungsgemäß dadurch gelöst, dass der Lagerzapfen eine Außenkontur aufweist, die zumindest in einem Überschneidungsbereich mit der Crimpung korrespondierend zu einer Innenkontur des vercrimpten rohrförmigen Trägers ausgebildet ist.

### Vorteile der Erfindung

Mit anderen Worten eröffnet das Ausbilden der Außenkontur des Lagerzapfens entsprechend der Innenkontur des rohrförmigen Trägers, die sich nach dem Crimpen aufgrund der damit hervorgerufenen Verformung des rohrförmigen Trägers einstellt, die Möglichkeit, den Crimpvorgang so zu steuern, dass der rohrförmige Träger während des Crimpens zwar plastisch verformt wird, gleichzeitig der Lagerzapfen aber nur eine materialschonende elastische Verformung erfährt. So können Spannungsspitzen an Randbereichen der Crimpungen reduziert oder gar vollständig ausgeschlossen und die Gefahr eines Materialbruchs oder einer Materialermüdung des Lagerzapfens deutlich verringert werden. Die Außenkontur des Lagerzapfens ist so ausgebildet sein, dass ein Flächenkontakt zwischen der Innenkontur des rohrförmigen Trägers und der Außenkontur des Lagerzapfens nur im Bereich eines bei der der Crimpung gebildeten Crimpbodens gebildet ist und der rohrförmige Träger im übrigen Bereich beabstandet vom Lagerzapfen angeordnet ist. Dies hat zum Vorteil, dass über den gesamten Bereich des Lagerzapfens keine Spannungen außerhalb des Bereichs der Crimpung von dem rohrförmigen Träger bzw. auf den Lagerzapfen mehr eingebracht werden.

Auch die zur Verformung notwendigen auf die Crimpwerkzeuge aufzubringenden Kräfte können so deutlich verringert werden, was zu einer wesentlich höheren Prozessgenauigkeit führt. Es wird sogar möglich, von einer reinen Wegsteuerung des Crimpvorgangs auf eine Kraftsteuerung umzustellen, da nahezu ausschließlich eine für die Verformung des rohrförmigen Trägers aufzubringende definierte Kraft notwendig wird, um eine zuverlässige Verbindung zwischen rohrförmigem Träger und Lagerzapfen zu erreichen.

Eine Zwangsdeformation des Lagerzapfens kann auf ein Minimum reduziert und somit das Risiko einer Beschädigung des Lagerzapfens während des Crimpens verringert werden, indem die Außenkontur des Lagerzapfens über den Bereich der Crimpung des rohrförmigen Trägers hinaus der "natürlichen" inneren Biegeform des rohrförmigen Trägers nach dem Crimpen angepasst wird.

In einem Ausführungsbeispiel der vorliegenden Erfindung ist daher die Außenkontur des Lagerzapfens entlang seiner gesamten Mantelfläche korrespondierend zu der Innenkontur des rohrförmigen Trägers im Bereich der Crimpung ausgebildet. Dadurch ist eine Montage des rohrförmigen Trägers an dem Wischerlager auch mit großen Toleranzen möglich. Es ist nicht notwendig, das Crimpwerkzeug genau zu positionieren und die Verbindungspartner zueinander auszurichten, da die Außenkontur de Lagerzapfens über seine gesamte Erstreckung geeignet ist, die Innenstruktur des rohrförmigen Trägers nach dem Crimpen aufzunehmen, ohne dass in diesem Bereich Spannungsspitzen auftreten.

Die Außenkontur des Lagerzapfens kann so ausgebildet sein, dass ein Flächenkontakt zwischen der Innenkontur des rohrförmigen Trägers und der Außenkontur des Lagerzapfens nur im Bereich eines bei der der Crimpung gebildeten Crimpbodens gebildet ist und der rohrförmige Träger im übrigen Bereich beabstandet vom Lagerzapfen angeordnet ist. Dies hat zum Vorteil, dass über den gesamten Bereich des Lagerzapfens keine Spannungen außerhalb des Bereichs der Crimpung von dem rohrförmigen Träger bzw. auf den Lagerzapfen mehr eingebracht werden.

Um die Biegesteifigkeit des Lagerzapfens entlang und quer zu seiner axialen Erstreckung zu verbessern, kann die Außenkontur des Lagerzapfens entlang und/oder quer zur axialen Erstreckung des Lagerzapfens Stege aufweisen, die insbesondere so angeordnet sind, dass die Biegesteifigkeit in horizontaler Erstreckung des Lagerzapfen größer ist als in vertikaler Erstreckung.

Ein Ausführungsbeispiel der vorliegenden Erfindung sieht vor, den Lagerzapfen insbesondere in Bereichen großer Spannungen, die durch die Verbindung mit der Innenkontur des rohrförmigen Trägers hervorgerufen werden können, mit mindestens einer Entlastungsfreisparung insbesondere in Form einer Vertiefung zu versehen.

Die Entlastungsfreisparung bzw. Vertiefung kann dabei so ausgebildet sein, dass sich eine Hinterschneidung im Bereich der durch die Crimpung hervorgerufene Verformung, insbesondere im Bereich der größten Verformung einstellt. Die Hinterschneidung kann so gewählt werden, dass der Lagerzapfen in den Randbereichen der Verformungsbereiche des rohrförmigen Trägers eine Art Opfergeometrie ausbildet, die sich bei zu großen Crimpkräften aufgrund Überschreitung der Toleranzen in die Vertiefung bzw. Entlastungsfreisparung hineinbewegt. Dadurch wird eine Vergrößerung des Toleranzfeldes für den Vorgang der Crimpung erreicht. Ab einem bestimmten Punkt ist es so möglich, trotz weiter steigender Crimpkräfte eine allenfalls geringfügige Veränderung der Bauteilgeometrien hervorzurufen, was den Crimpvorgang besonders flexibel gestalten lässt.

In einem Ausführungsbeispiel der vorliegenden Erfindung weist der Lagerzapfen einen Querschnitt mit Knochen- oder Schmetterlingsform auf. Diese Wahl der Form bietet eine besonders gute Formstabilität des Lagerzapfens und sorgt für eine gute Spannungsverteilung und somit für einen Spannungsausgleich in dem Lagerzapfen auch bei höheren Crimpkräften. Wird ein schrittweises Crimpen durchgeführt, kann beobachtet werden, dass der rohrförmige Träger von Schritt zu Schritt eckiger und kantiger wird. Dadurch wird ein Kontaktwinkel α zwischen rohrförmigem Träger und Lagerzapfen immer kleiner je steiler die Flanken des rohrförmigen Trägers im Crimpbereich werden. Geht der Kontaktwinkel gegen 90° so wird eine von dem Torsionsmoment auf den Lagerzapfen aufgebrachte Normalkraft immer kleiner. Mit anderen Wort gilt, dass je steiler die Flanken des Lagerzapfens gegenüber dem rohrförmigen Träger gewählt werden, desto besser kann die Aufnahme von Kräften und Drehmomenten erfolgen. Dieser Zusammenhang wird besonders gut bei der bereits erwähnten Knochen- bzw. Schmetterlingsstruktur des Lagerzapfens erreicht.

Zur Sicherung der Verbindung zwischen rohrförmigem Träger und Lagerzapfen kann in einem Ausführungsbeispiel der vorliegenden Erfindung der Lagerzapfen eine sich radial erstreckende zylindrische Bohrung aufweisen. In dieser Bohrung kann nach der Montage und dem Crimpen des rohrförmigen Trägers an den Lagerzapfen beispielsweise ein Bolzen eingesetzt werden, der den rohrförmigen Träger mit dem Lagerzapfen in dieser Position verriegelt. Dazu können in dem rohrförmigen Träger komplementär dazu ausgebildete Öffnungen ausgebildet sein. Alternativ ist es auch möglich, einen Bolzen nach Montage des rohrförmigen Trägers auf den Lagerzapfen durch die miteinander verbundenen Bauteile einzutreiben.

Eine weitere Möglichkeit, die Verbindung zwischen dem Wischerlager und dem rohrförmigen Träger zu stabilisieren und die Montage möglichst fehlerarm zu gestalten, sieht vor, an dem Wischerlager ein zum Lagerzapfen koaxial angeordnetes Ringelement auszubilden, um den rohrförmigen Träger zur Stabilisierung seiner Position auf den Lagerzapfen aufzuschieben und in dem Ringelement aufzunehmen. Durch dieses Ringelement wird eine Endposition des rohrförmigen Trägers auf dem Lagerzapfen bzw. dem Wischerlager genau definiert, da der Boden des Ringelements eine Anschlagfläche des rohrförmigen Trägers an dem Wischerlager darstellen kann.

Zur Herstellung einer erfindungsgemäßen Scheibenwischervorrichtung für ein Kraftfahrzeug mit einem Wischermotor und mit mindestens einem Wischerlager, in welchem eine Wischerwelle gelagert ist, die zur Betätigung eines mit der Wischerwelle verbundenen Wischerarms mittels des Wischermotors angetrieben wird, wobei das Wischerlager einen Lagerzapfen zur Aufnahme eines rohrförmigen Trägers aufweist, der an dem rohrförmigen Träger mittels Crimpens fixiert wird, sieht folgende Schritte zur Herstellung einer spannungsoptimierten Verbindung zwischen rohrförmigem Träger und Lagerzapfen vor:
- Crimpen des rohrförmigen Trägers mit einem oder mehreren Crimpwerkzeugen;
- Bestimmen einer sich durch das Crimpen einstellenden Innenkontur des rohrförmigen Trägers;
- Berechnen einer spannungsoptimierten Außenkontur des Lagerzapfens auf Basis der Innenkontur des rohrförmigen Trägers nach dem Crimpen;
- Herstellen des Lagerzapfens derart, dass der Lagerzapfen eine Außenkontur aufweist, die zumindest in einem Überschneidungsbereich mit der Crimpung korrespondierend zu der Innenkontur des vercrimpten rohrförmigen Trägers ausgebildet ist.;
- Aufschieben des rohrförmigen Trägers auf den Lagerzapfen;
- Crimpen des rohrförmigen Trägers.

Die Materialbeanspruchung des Crimpzapfens sowie des rohrförmigen Trägers kann möglichst klein gehalten und so die Lebensdauer des Wischerlagers weiter erhöht werden, indem die durch das Crimpwerkzeug auf die Verbindung zwischen den beiden Bauteilen wirkende Kraft so gewählt wird, dass die plastische Verformung des rohrförmigen Trägers während des Crimpens zu einer elastischen Verformung des Materials des Lagerzapfens führt. So ist gewährleistet, dass sich eine zuverlässige formschlüssige Verbindung zwischen rohrförmigem Träger und Lagerzapfen einstellt und gleichzeitig die auf die Verbindungspartner wirkenden Kräfte minimal sind.

Zur Vermeidung von Spannungsspitzen kann ferner in einem Ausführungsbeispiel des erfindungsgemäßen Verfahrens in Bereichen großer Spannungen, die an der Außenkontur des Lagerzapfens insbesondere im Bereich des Flächenkontakts mit der Innenkontur des rohrförmigen Trägers auftreten können, mindestens eine Entlastungsfreisparung eingebracht werden.

Um einen möglichst flexiblen Einsatz der Crimpwerkzeuge auch für verschiedenartige Anordnungen der Crimptaschen beispielsweise für die Befestigung des rechten oder linken Wischerlagers zu ermöglichen, können in einem Ausführungsbeispiel zwei separat justierbare Crimpwerkzeuge eingesetzt werden. Das Crimpen über mindestens zwei separat justierbare Crimpwerkzeuge ermöglicht, die Crimpung einer Beanspruchungsrichtung des Wischerlagers anzupassen.

Hinsichtlich weiterer vorteilhafter Ausgestaltungen der vorliegenden Erfindung wird auf die Unteransprüche sowie die beigefügten Zeichnungen verwiesen, die im Folgenden näher erläutert sind.

### Kurze Beschreibung der Zeichnungen

Es zeigen:
- Figur 1: eine schematische Querschnittsdarstellung eines rohrförmigen Trägers mit einem Crimpwerkzeug, vier Crimpstempel aufweisend;
- Figur 2: einen rohrförmigen Träger gemäß Figur 1 nach dem Crimpen;
- Figur 3: eine schematische Darstellung eines Lagerzapfens, welcher in den rohrförmigen Träger eingesetzt ist, vor dem Crimpen;
- Figur 4: eine alternative Ausführungsform eines Lagerzapfens mit knochen- und schmetterlingsförmigem Querschnitt;
- Figur 5: den Lagerzapfen nebst rohrförmigen Träger nach dem Crimpen; und
- Figur 6: einen weiteren erfindungsgemäßen Lagerzapfen in einem rohrförmigen Träger vor dem Crimpen.

### Ausführungsformen der Erfindung

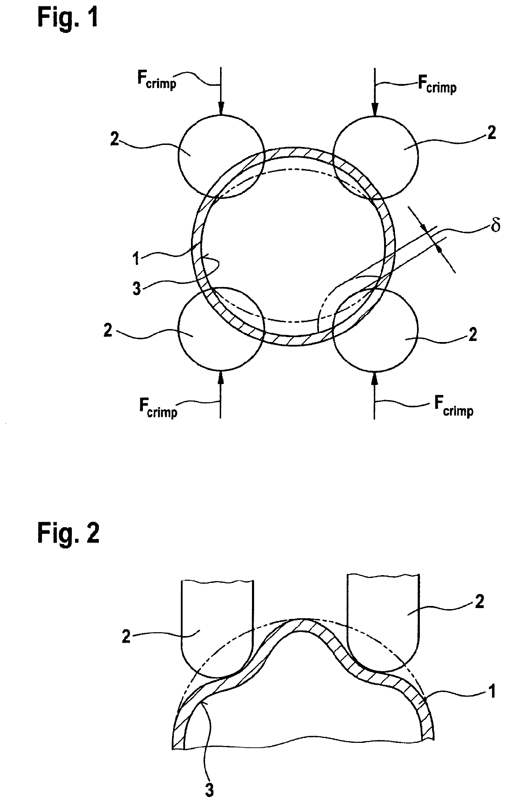

Die Figur 1 zeigt eine schematische Querschnittsdarstellung eines rohrförmigen Trägers 1 einer nicht näher dargestellten Scheibenwischervorrichtung für ein Kraftfahrzeug.

An dem rohrförmigen Träger 1 ist ein Crimpwerkzeug angeordnet, welches vier Crimpstempel 2 umfasst. Die Crimpstempel 2 sind so angeordnet, dass eine Rückfederung an die durch das Crimpen hervorgerufene Verformung des Kreisquerschnittes des rohrförmigen Trägers 1 angepasst ist, d.h. dass die Rückfederung δ und die Verformung minimal sind.

Der rohrförmige Träger 1 weist in seiner ursprünglichen Form eine kreisförmige Querschnittsfläche mit einer Innenkontur 3 auf, welche durch Aufbringen einer Kraft F_{crimp} auf die Crimpstempel 2 bereichsweise verformt wird, so dass sie nach dem Crimpvorgang eine wie in der Figur 2 gezeigte Form annimmt. Gemäß dem Stand der Technik wird in den rohrförmigen Träger 1 gemäß der Figuren 1 und 2 ein Lagerzapfen eingesetzt, dessen Querschnittsfläche im Wesentlichen kreisförmig ausgebildet und dessen Außenkontur im Wesentlichen der Innenkontur 3 des rohrförmigen Trägers 1 folgt.

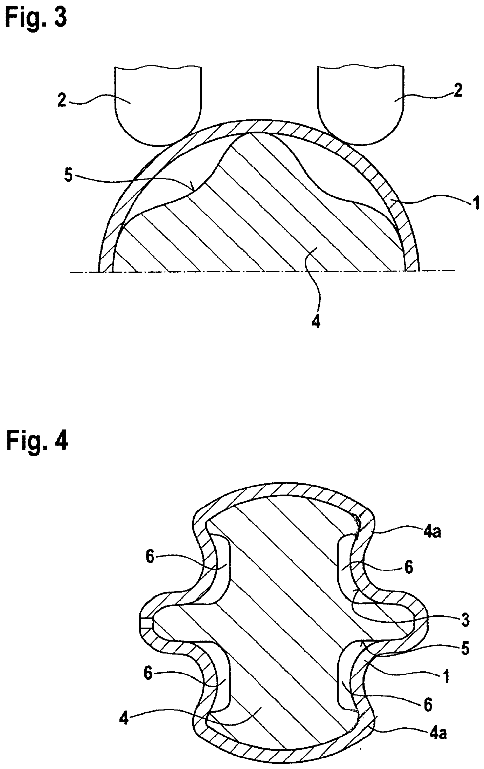

Durch die Verformungskräfte der Crimpzapfen 2 treten im Stand der Technik große Spannungen in dem Material des Lagerzapfens auf, da das Material des Lagerzapfens entsprechend der Verformung der Innenkontur des rohrförmigen Trägers plastisch verformt wird. Um dies zu verhindern, wird erfindungsgemäß ein Lagerzapfen 2 wie in Figur 3 gezeigt vor dem Crimpvorgang in den rohrförmigen Träger 1 eingesetzt. Eine Außenkontur 4 des Lagerzapfens 2 ist so ausgebildet, dass sie korrespondierend zu der Innenkontur 3 des rohrförmigen Trägers 1 im bereits vercrimpten Zustand ausgebildet ist.

Das Ausbilden der Außenkontur 4 des Lagerzapfens 2 entsprechend der vercrimpten Innenkontur 3 des rohrförmigen Trägers 1 bereits vor einem Vercrimpen eröffnet die Möglichkeit, den Crimpvorgang so zu steuern, dass der rohrförmige Träger 1 während des Crimpens zwar plastisch verformt wird, gleichzeitig der Lagerzapfen 2 während des Verformens aber nur eine wesentlich materialschonendere elastische Verformung erfährt. So können Spannungsspitzen an den Randbereichen der Crimpung sowohl im rohrförmigen Träger 1 als auch im Lagerzapfen 2 reduziert oder sogar vollständig ausgeschlossen und die Gefahr eines Materialbruchs oder einer Materialermüdung des Lagerzapfens 2 deutlich verringert werden.

Eine besonders gute Formstabilität des Lagerzapfens 4 wird durch einen Lagerzapfen 4 mit einer Querschnittsfläche in Knochen- oder Schmetterlingsform erreicht. Diese sorgt für eine gute Spannungsverteilung innerhalb des Lagerzapfens 4 auch bei höheren Crimpkräften. Die Figur 4 zeigt eine solche Ausführungsform eines Lagerzapfens 2 mit knochen- oder schmetterlingsförmigem Querschnitt. Der knochenförmige bzw. schmetterlingsförmige Querschnitt wird erreicht, indem Entlastungsfreisparungen in der Form von Vertiefungen 6 in den Lagerzapfen 4 eingebracht werden. Durch Vorsehen der Vertiefungen 6 im Lagerzapfen 4 wird der elastische Anteil der Verformung der Innenkontur 3 des rohrförmigen Trägers 1 beim Crimpen vorgehalten, d.h. die innere Rohrgeometrie 3 des rohrförmigen Trägers 1 berührt den Lagerzapfen 4 auch während und nach dem Crimpen außerhalb der Crimpverbindung bzw. eines beim Crimpen durch die Innenkontur 3 des rohrförmigen Trägers 1 gebildeten Crimpgrundes nicht. Dies führt dazu, dass keine unnötigen Spannungen auf die Außenkontur 5 des Lagerzapfens 4 und damit auf das Lagerzapfenmaterial während des Crimpens eingebracht werden. Durch die Vertiefung 6 wird in diesem Ausführungsbeispiel eine Art Hinterschneidung innerhalb der Geometrie des Lagerzapfens 4 erreicht. Die Hinterschneidung ist hier so gewählt, dass der Lagerzapfen in den dem rohrförmigen Träger 1 zugewandten Randbereichen eine Art Opfergeometrie 4a ausbildet, welche sich bei zu großen Crimpkräften aufgrund der Überschreitung der Toleranzen der Crimpkräfte in die Vertiefungen 6 bzw. Entlastungsfreisparungen hineinbewegen können. So wird erreicht, dass selbst ein deutliches Überschreiten der zur Bildung der Crimpung notwendigen Crimpkräfte durch eine entsprechende Bewegung der Opfergeometrie 4a in die Entlastungsfreisparung 6 hinein aufgefangen und so eine Bauteilschädigung verhindert werden kann.

Zur Steigerung des Effektes sind die Flanken des Lagerzapfens 4 gegenüber dem rohrförmigen Träger 1 so gewählt, dass sie möglichst steil zu der Geometrie des rohrförmigen Trägers 1 nach der Crimpung ausgerichtet sind, um die Aufnahme von Kräften und Drehmomenten zu verbessern.

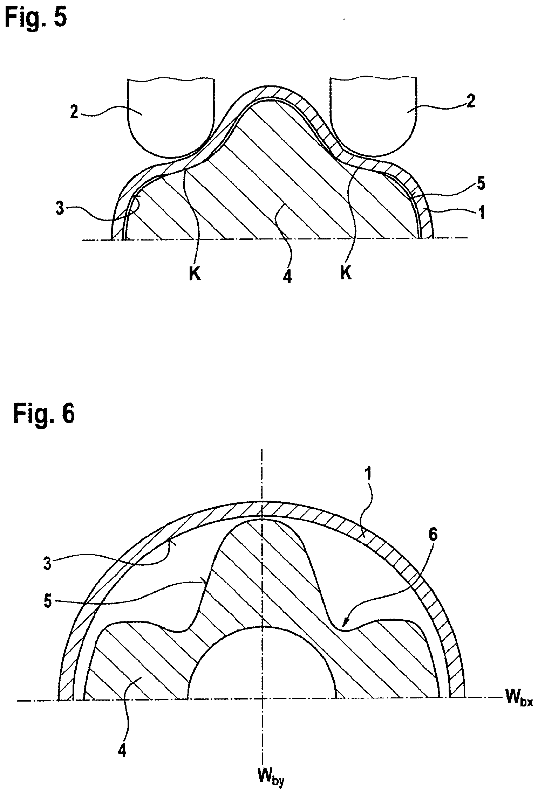

Wie in der Figur 5 genauer zu sehen ist, kann die Kraft F_{crimp} so gewählt werden, dass sich lediglich zwischen dem rohrförmigen Träger 1 und dem Lagerzapfen 2 nur im Bereich der Crimpung ein Flächenkontakt K einstellt und der rohrförmige Träger 1 im übrigen Bereich beabstandet vom Lagerzapfen 2 angeordnet ist.

Um eine rein formschlüssige Verbindung zwischen rohrförmigem Träger 1 und Lagerzapfen 4 zu erhalten, sind in einem alternativen Ausführungsbeispiel der vorliegenden Erfindung gemäß Figur 6 an dem Lagerzapfen 4 zur Vermeidung von Spannungsspitzen zwischen den beiden Verbindungspartnern aufgrund der Verformung der Innenkontur 3 entlang des rohrförmigen Trägers 1 Entlastungsfreisparungen in der Form von Vertiefungen 6 in den Lagerzapfen 4 eingebracht. So wird die mechanische Festigkeit des Lagerzapfens 4 auch im Bereich der Crimpung nicht beeinträchtigt, was mit einer Steigerung der Zuverlässigkeit und Qualität der formschlüssigen Verbindung zwischen Lagerzapfen 4 und rohrförmigem Träger 1 einhergeht.

Wie in Figur 6 näher zu sehen ist, verläuft die Außenkontur 5 des Lagerzapfens 4, der in diesem Ausführungsbeispiel als Hohlkörper ausgebildet ist, entlang seiner gesamten in den rohrförmigen Träger 1 eingesetzten Mantelfläche bereits vor Einbringung der Crimpung entsprechend der Innenkontur 3 des rohrförmigen Trägers 1 nach dem Crimpvorgang. Dadurch wird gewährleistet, dass eine Montage des rohrförmigen Trägers 1 an dem Wischerlager auch mit großen Toleranzen möglich ist. Es ist nämlich nicht mehr wie im Stand der Technik notwendig, das Crimpwerkzeug zur Einbringung der Crimpung genau auf einen Bereich des Lagerzapfens, in dem eventuell Crimptaschen vorgesehen sind, zu positionieren.

Die Crimpgeometrie ist in diesem Ausführungsbeispiel so gewählt worden, dass die Widerstandsfähigkeit gegen Biegen in X und Y-Achse unterschiedlich ausgeprägt ist, d.h. dass das Widerstandsmoment B_{wx} > B_{y}, da B_{wx} in der diesem Ausführungsbeispiel in der Hauptbeanspruchungsrichtung der Verbindung zwischen Lagerzapfen 4 und rohrförmigem Träger 1 liegt.

Zur Bestimmung der optimalen Außengeometrie 5 des Lagerzapfens 4 schlägt ein erfindungsgemäßes Verfahren vor, zunächst eine Verformung des rohrförmigen Trägers 1 gemäß den Figuren 1 und 2 mit einem Crimpwerkzeug vorzunehmen, um die Innenkontur 3 des rohrförmigen Trägers 1 nach dem Crimpen zu bestimmen. Anschließend wird anhand der so erhaltenen Innenkontur 3 des rohrförmigen Trägers 1 eine spannungsoptimierte Außenkontur 5 des Lagerzapfens 4 berechnet und ein Lagerzapfen 4 derart hergestellt, dass er eine Außenkontur 5 aufweist, die bereits vor Einbringung der Crimpung in einem Überschneidungsbereich mit der Crimpung korrespondierend zu der Innenkontur 3 des vercrimpten rohrförmigen Trägers 1 ausgebildet ist. An dem Lagerzapfen 4 wird als Entlastungsfreisparung eine Vertiefung 6 vorgesehen, die im Bereich der höchsten Materialdehnung bzw. Materialspannung, die von der Innenkontur 3 des rohrförmigen Trägers 1 auf das Material des Lagerzapfens 4 eingebracht wird, ausgebildet ist. Dadurch wird erreicht, dass während des Crimpvorgangs auch der Anteil der elastischen Verformung der Innenkontur 3 des rohrförmigen Trägers 1 in dem Lagerzapfen 4 vorgehalten wird und so auch der Betrag der elastischen Verformung des rohrförmigen Trägers 1 nicht vom Material des Lagerzapfens 4 aufgenommen werden muss, sondern bereits durch die Vertiefung 6 aufgefangen wird.

Im Anschluss wird der rohrförmige Träger 1 auf den so modifizierten Lagerzapfen 4 aufgeschoben und das Crimpwerk so zusammengeschoben, dass der rohrförmige Träger 1 durch die Kraft F_{crimp} der Crimpstempel 2 verformt wird. Bei plastischer Verformung des rohrförmigen Trägers 1 und elastischer Verformung des Lagerzapfens 4 stellt sich so ein Flächenkontakt K im Verbindungsbereich zwischen rohrförmigem Träger 1 und Lagerzapfen 4 gemäß Figur 6 ein.

Durch die knochen- oder schmetterlingsförmige Struktur des Lagerzapfens wird ferner erreicht, dass im Bereich der Wendepunkte 9 der Biegung des rohrförmigen Trägers 1 nach der Crimpung ein stabiler Kontaktbereich bereitgestellt wird, welcher im Lagerzapfen 4 als besagte Opfergeometrie ausgebildet ist, um auch hier bei Überschreiten einer maximal aufzunehmenden Kraft durch diesen Bereich im Lagerzapfen 4 ohne Überlast ein Ausgleich durch Hineinbewegung der Opfergeometrie in die Bereich der Vertiefung 6 erreicht wird. Vorzugsweise wird zur Ausbildung eines knochen- oder schmetterlingsförmigen Lagerzapfens Kunststoff als Material gewählt. Natürlich ist es auch möglich, den Lagerzapfen 4 in diesem Fall aus Aluminium oder einem anderen Stoff herzustellen, welcher ein geringeres E-Modul aufweist als das E-Modul des rohrförmigen Trägers 1. Aufgrund der Möglichkeit der Aufnahme von Crimpkräften wird der Lagerzapfen 4 unempfindlich gegen Crimptiefentolleranzabweichungen im äußeren Berührungsbereich. Durch die Steigerung des Kontaktwinkels α bis annähernd 90° wird die auf den Berührungsbereich wirkende Normalkraft minimiert und die Zugbelastung in den Wändepunkten des rohrförmigen Trägers 1 während und nach der Crimpung auf 9% verringert, so dass die Gefahr einer Überbelastung der Wändebereiche 9 des rohrförmigen Trägers bzw. des Lagerzapfens 4 vermindert bzw. nahezu vollständig ausgeschlossen werden kann.

## Patentansprüche

1. Scheibenwischervorrichtung für ein Kraftfahrzeug, mit einem Wischermotor und mit mindestens einem Wischerlager, in welchem eine Wischerwelle gelagert ist, die zur Betätigung eines mit der Wischerwelle verbundenen Wischerarmes mittels des Wischermotors antreibbar ist, wobei das Wischerlager einen Lagerzapfen (4) zur Aufnahme eines rohrförmigen Trägers (1) aufweist, der mittels einer Crimpung an dem rohrförmigen Träger (1) fixierbar ist, wobei der Lagerzapfen (4) eine Außenkontur (5) aufweist, die bereits vor Einbringung der Crimpung zumindest in einem Überschneidungsbereich mit der Crimpung korrespondierend zu einer Innenkontur (3) des vercrimpten rohrförmigen Trägers (1) ausgebildet ist, **dadurch gekennzeichnet, dass** die Außenkontur (5) des Lagerzapfens (4) so ausgebildet ist, dass ein Flächenkontakt (K) zwischen der Innenkontur (3) des rohrförmigen Trägers (1) und der Außenkontur (5) des Lagerzapfens (4) nur im Bereich eines bei der der Crimpung gebildeten Crimpbodens gebildet ist und der rohrförmige Träger (1) im übrigen Bereich beabstandet vom Lagerzapfen (4) angeordnet ist.

2. Scheibenwischervorrichtung nach Anspruch 1, **dadurch gekennzeichnet, dass** ist die Außenkontur (5) des Lagerzapfens (4) entlang seiner gesamten Mantelfläche korrespondierend zu der Innenkontur (3) des rohrförmigen Trägers (1) im Bereich der Crimpung ausgebildet ist.

3. Scheibenwischervorrichtung nach Anspruch 1 oder 2, **dadurch gekennzeichnet, dass** die Außenkontur (5) des Lagerzapfens (4) so ausgebildet ist, dass ein Flächenkontakt (K) zwischen der Innenkontur (3) des rohrförmigen Trägers (1) und der Außenkontur (5) des Lagerzapfens (4) nur im Bereich eines bei der der Crimpung gebildeten Crimpbodens gebildet ist und der rohrförmige Träger (1) im übrigen Bereich beabstandet vom Lagerzapfen (4) angeordnet ist.

4. Scheibenwischervorrichtung nach einem der vorhergehenden Ansprüche, **dadurch gekennzeichnet, dass** ist die Außenkontur (5) des Lagerzapfens (4) entlang seiner gesamten Mantelfläche entsprechend Innenkontur (3) des rohrförmigen Trägers(1), die der rohrförmige Träger (1) nach dem Crimpvorgang im Bereich der Crimpung einnimmt, ausgebildet ist.

5. Scheibenwischervorrichtung nach einem der vorhergehenden Ansprüche, **dadurch gekennzeichnet, dass** die Außenkontur (5) des Lagerzapfens (4) zur Erhöhung einer Biegesteifigkeit des Lagerzapfens (4) entlang und/oder quer zur axialen Erstreckung des Lagerzapfens (4) Stege aufweist, die insbesondere so angeordnet sind, dass die Biegesteifigkeit in horizontaler Erstreckung des Lagerzapfens (4) größer ist als in vertikaler Erstreckung.

6. Scheibenwischervorrichtung nach einem der vorhergehenden Ansprüche, **dadurch gekennzeichnet, dass** der Lagerzapfen (4) mindestens eine Entlastungsfreisparung insbesondere in Form einer Vertiefung (6) aufweist.

7. Scheibenwischvorrichtung nach Anspruch 5, **dadurch gekennzeichnet, dass** die Entlastungsfreisparung, insbesondere in Form einer Vertiefung (6) derart in dem Lagerzapfen (4) ausgebildet ist, dass sich mindestens eine Hinterschneidung im Bereich der durch die Crimpung hervorgerufenen Verformung des rohrförmigen Trägers (1) einstellt.

8. Scheibenwischvorrichtung nach Anspruch 5 oder 6, **dadurch gekennzeichnet, dass** die in der Hinterschneidung derart an einem Querschnitt des Lagerzapfens (4) ausgebildet ist, dass sich eine Opfergeometrie zur Aufnahme von Crimpkräften an dem Lagerzapfen (4) ausbildet.

9. Scheibenwischvorrichtung nach einem der vorhergehenden Ansprüche, **dadurch gekennzeichnet, dass** der Lagerzapfen (4) eine Querschnittsfläche in Knochen- oder Schmetterlingsform aufweist.

10. Scheibenwischervorrichtung nach einem der vorhergehenden Ansprüche, **dadurch gekennzeichnet, dass** der Lagerzapfen (4) eine sich radial erstreckende zylindrische Bohrung aufweist.

11. Scheibenwischervorrichtung nach einem der vorhergehenden Ansprüche, **dadurch gekennzeichnet, dass** an dem Wischerlager ein zum Lagerzapfen (4) koaxial angeordnetes Ringelement an dem Wischerlager ausgebildet ist, um den rohrförmigen Träger (1) zur Stabilisierung seiner Position auf den Lagerzapfen (4) aufzuschieben und in dem Ringelement aufzunehmen.

12. Verfahren zur Herstellung einer Scheibenwischervorrichtung für ein Kraftfahrzeug mit einem Wischermotor und mit mindestens einem Wischerlager, in welchem eine Wischerwelle gelagert ist, die zur Betätigung eines mit der Wischerwelle verbundenen Wischerarms mittels des Wischermotors angetrieben wird, wobei das Wischerlager einen Lagerzapfen (4) zur Aufnahme eines rohrförmigen Trägers (1) aufweist, der an dem rohrförmigen Träger (1) mittels Crimpens fixiert wird, nach einem der vorhergehenden Ansprüche, **dadurch gekennzeichnet, dass** es zur Herstellung einer spannungsoptimierten Verbindung zwischen dem rohrförmigen Träger (1) und dem Lagerzapfen (4) folgende Schritte umfasst:
- Crimpen des rohrförmigen Trägers (1) mit einem oder mehreren Crimpwerkzeugen;
- Bestimmen einer sich durch das Crimpen einstellenden Innenkontur (3) des rohrförmigen Trägers(1);
- Berechnen einer spannungsoptimierten Außenkontur (5) des Lagerzapfens (4) auf Basis der Innenkontur (3) des rohrförmigen Trägers (1)nach dem Crimpen;
- Herstellen des Lagerzapfens (4) derart, dass er bereits vor Einbringung der Crimpung eine Außenkontur (5) aufweist, die zumindest in einem Überschneidungsbereich mit der Crimpung korrespondierend zu der Innenkontur (3) des vercrimpten rohrförmigen Trägers (1) ausgebildet ist.;
- Aufschieben des rohrförmigen Trägers (1) auf den Lagerzapfen (4);
- Crimpen des rohrförmigen Trägers (1).

13. Verfahren nach Anspruch 11, **dadurch gekennzeichnet, dass** in Bereichen großer Spannungen, die an der Außenkontur (5) des Lagerzapfens (4) insbesondere im Bereich des Flächenkontakts mit der Innenkontur (3) des rohrförmigen Trägers (1) auftreten können, mindestens eine Entlastungsfreisparung (6) eingebracht wird.

14. Verfahren nach Anspruch 11 oder 12, **dadurch gekennzeichnet, dass** das Crimpen über mindestens zwei separat justierbare Crimpwerkzeuge (2) erfolgt, um die Crimpung einer Beanspruchungsrichtung des Wischerlagers anpassen zu können.

## Claims

1. Windshield wiper apparatus for a motor vehicle, with a wiper motor and with at least one wiper bearing in which a wiper shaft is mounted, the wiper shaft being drivable by means of the wiper motor in order to actuate a wiper arm connected to the wiper shaft, wherein the wiper bearing has a bearing pin (4) for receiving a tubular support (1), said bearing pin being fixable to the tubular support (1) by means of a crimp, wherein the bearing pin (4) has an outer contour (5) which, even before the crimp is introduced, is formed, at least in a region of overlap with the crimp, so as to correspond to an inner contour (3) of the crimped tubular support (1), **characterized in that** the outer contour (5) of the bearing pin (4) is designed in such a manner that a surface contact (K) between the inner contour (3) of the tubular support (1) and the outer contour (5) of the bearing pin (4) is formed only in the region of a crimping base formed during the crimping, and the tubular support (1) is otherwise spaced apart from the bearing pin (4).

2. Windshield wiper apparatus according to Claim 1, **characterized in that** the outer contour (5) of the bearing pin (4) is designed along the entire circumferential surface thereof so as to correspond to the inner contour (3) of the tubular support (1) in the region of the crimp.

3. Windshield wiper apparatus according to claim 1 or 2, **characterized in that** the outer contour (5) of the bearing pin (4) is designed in such a manner that a surface contact (K) between the inner contour (3) of the tubular support (1) and the outer contour (5) of the bearing pin (4) is formed only in the region of a crimping base formed during the crimping, and the tubular support (1) is otherwise spaced apart from the bearing pin (4).

4. Windshield wiper apparatus according to one of the preceding claims, **characterized in that** the outer contour (5) of the bearing pin (4) is designed along the entire circumferential surface thereof so as to correspond to the inner contour (3) of the tubular support (1), the tubular support (1) adopting said inner contour in the region of the crimp after the crimping operation.

5. Windshield wiper apparatus according to one of the preceding claims, **characterized in that**, in order to increase a flexural rigidity of the bearing pin (4) along and/or transversely with respect to the axial extent of the bearing pin (4), the outer contour (5) of the bearing pin (4) has webs which are arranged in particular in such a manner that the flexural rigidity is greater in the horizontal extent of the bearing pin (4) than in the vertical extent.

6. Windshield wiper apparatus according to one of the preceding claims, **characterized in that** the bearing pin (4) has at least one relief clearance, in particular in the form of a depression (6).

7. Windshield wiper apparatus according to Claim 5, **characterized in that** the relief clearance, in particular in the form of a depression (6), is formed in the bearing pin (4) in such a manner that at least one undercut arises in the region of the crimping-induced deformation of the tubular support (1).

8. Windshield wiper apparatus according to Claim 5 or 6, **characterized in that** the undercut is formed on a cross section of the bearing pin (4) in such a manner that a sacrificial geometry is formed for absorbing crimping forces on the bearing pin (4).

9. Windshield wiper apparatus according to one of the preceding claims, **characterized in that** the bearing pin (4) has a cross-sectional area in the shape of a bone or butterfly.

10. Windshield wiper apparatus according to one of the preceding claims, **characterized in that** the bearing pin (4) has a radially extending, cylindrical bore.

11. Windshield wiper apparatus according to one of the preceding claims, **characterized in that** on the wiper bearing a ring element which is arranged coaxially with respect to the bearing pin (4) is formed on the wiper bearing in order to push the tubular support (1) onto the bearing pin (4) to stabilize the position of said support and to accommodate the latter in the ring element.

12. Method for producing a windshield wiper apparatus for a motor vehicle, with a wiper motor and with at least one wiper bearing in which a wiper shaft is mounted, the wiper shaft being driven by means of the wiper motor in order to actuate a wiper arm connected to the wiper shaft, wherein the wiper bearing has a bearing pin (4) for receiving a tubular support (1), which bearing pin is fixed on the tubular support (1) by means of crimping, according to one of the preceding claims, **characterized in that**, for the production of a stress-optimized connection between the tubular support (1) and the bearing pin (4), the method comprises the following steps:
- crimping the tubular support (1) with one or more crimping tools;
- determining an inner contour (3) of the tubular support (1), the inner contour arising as a result of the crimping;
- calculating a stress-optimized outer contour (5) of the bearing pin (4) on the basis of the inner contour (3) of the tubular support (1) after the crimping;
- producing the bearing pin (4) in such a manner that, even before the crimping is introduced, said bearing pin has an outer contour (5) which is formed, at least in a region of overlap with the crimp, so as to correspond to the inner contour (3) of the crimped tubular support (1);
- pushing the tubular support (1) onto the bearing pin (4);
- crimping the tubular support (1).

13. Method according to Claim 11, **characterized in that** at least one relief clearance (6) is provided in regions of great stresses which may occur on the outer contour (5) of the bearing pin (4), in particular in the region of the surface contact with the inner contour (3) of the tubular support (1).

14. Method according to Claim 11 or 12, **characterized in that** the crimping takes place via at least two separately adjustable crimping tools (2) in order to be able to adapt the crimping to a loading direction of the wiper bearing.

## Revendications

1. Dispositif d'essuie-glace pour un véhicule automobile comprenant un moteur d'essuie-glace et au moins un palier d'essuie-glace dans lequel est monté un arbre d'essuie-glace qui peut être entraîné pour l'actionnement, au moyen du moteur d'essuie-glace, d'un bras d'essuie-glace relié à l'arbre d'essuie-glace, le palier d'essuie-glace comprenant un tourillon de palier (4) servant à recevoir un support tubulaire (1), lequel tourillon de palier peut être fixé au support tubulaire (1) au moyen d'un sertissage, le tourillon de palier (4) comprenant un contour extérieur (5) qui, déjà avant l'application du sertissage, est formé de manière correspondante à un contour intérieur (3) du support tubulaire (1) serti, au moins dans une zone de chevauchement avec le sertissage, **caractérisé en ce que** le contour extérieur (5) du tourillon de palier (4) est formé de telle sorte qu'un contact de surface (K) entre le contour intérieur (3) du support tubulaire (1) et le contour extérieur (5) du tourillon de palier (4) ne soit formé que dans la zone d'une base de sertissage formée lors du sertissage et que le support tubulaire (1) soit disposé de manière espacée du tourillon de palier (4) dans la zone restante.

2. Dispositif d'essuie-glace selon la revendication 1, **caractérisé en ce que** le contour extérieur (5) du tourillon de palier (4) le long de toute sa surface d'enveloppe est formé de manière correspondante au contour intérieur (3) du support tubulaire (1) dans la zone du sertissage.

3. Dispositif d'essuie-glace selon la revendication 1 ou 2, **caractérisé en ce que** le contour extérieur (5) du tourillon de palier (4) est formé de telle sorte qu'un contact de surface (K) entre le contour intérieur (3) du support tubulaire (1) et le contour extérieur (5) du tourillon de palier (4) ne soit formé que dans la zone d'une base de sertissage formée lors du sertissage et que le support tubulaire (1) soit disposé de manière espacée du tourillon de palier (4) dans la zone restante.

4. Dispositif d'essuie-glace selon l'une quelconque des revendications précédentes, **caractérisé en ce que** le contour extérieur (5) du tourillon de palier (4) le long de toute sa surface d'enveloppe est formé de manière correspondante au contour intérieur (3) du support tubulaire (1), contour intérieur que le support tubulaire (1) adopte après l'opération de sertissage dans la zone du sertissage.

5. Dispositif d'essuie-glace selon l'une quelconque des revendications précédentes, **caractérisé en ce que** le contour extérieur (5) du tourillon de palier (4) comprend des nervures pour augmenter une rigidité à la flexion du tourillon de palier (4) le long de et/ou transversalement à l'étendue axiale du tourillon de palier (4), lesquelles nervures sont en particulier disposées de telle sorte que la rigidité à la flexion dans l'étendue horizontale du tourillon de palier (4) soit supérieure à celle dans l'étendue verticale.

6. Dispositif d'essuie-glace selon l'une quelconque des revendications précédentes, **caractérisé en ce que** le tourillon de palier (4) comprend au moins un espace libre de détente en particulier sous la forme d'un évidement (6) .

7. Dispositif d'essuie-glace selon la revendication 5, **caractérisé en ce que** l'espace libre de détente est formé, en particulier sous la forme d'un évidement (6), dans le tourillon de palier (4) de telle sorte qu'au moins une contre-dépouille soit formée dans la zone de la déformation, provoquée par le sertissage, du support tubulaire (1).

8. Dispositif d'essuie-glace selon la revendication 5 ou 6, **caractérisé en ce que** la contre-dépouille est formée au niveau d'une section transversale du tourillon de palier (4) de telle sorte qu'il se forme une géométrie sacrificielle servant à absorber des forces de sertissage au niveau du tourillon de palier (4).

9. Dispositif d'essuie-glace selon l'une quelconque des revendications précédentes, **caractérisé en ce que** le tourillon de palier (4) présente une aire en section transversale en forme d'os ou de papillon.

10. Dispositif d'essuie-glace selon l'une quelconque des revendications précédentes, **caractérisé en ce que** le tourillon de palier (4) comprend un alésage cylindrique s'étendant radialement.

11. Dispositif d'essuie-glace selon l'une quelconque des revendications précédentes, **caractérisé en ce que**, sur le palier d'essuie-glace, un élément annulaire disposé coaxialement au tourillon de palier (4) est disposé sur le palier d'essuie-glace, pour pousser le support tubulaire (1) sur le tourillon de palier (4) afin de stabiliser sa position et pour le recevoir dans l'élément annulaire.

12. Procédé de fabrication d'un dispositif d'essuie-glace pour un véhicule automobile comprenant un moteur d'essuie-glace et au moins un palier d'essuie-glace dans lequel est monté un arbre d'essuie-glace qui est entraîné pour l'actionnement, au moyen du moteur d'essuie-glace, d'un bras d'essuie-glace relié à l'arbre d'essuie-glace, le palier d'essuie-glace comprenant un tourillon de palier (4) servant à recevoir un support tubulaire (1) qui est fixé au support tubulaire (1) au moyen d'un sertissage selon l'une quelconque des revendications précédentes, **caractérisé en ce qu'**en vue de la réalisation d'une liaison, optimisée en termes de contraintes, entre le support tubulaire (1) et le tourillon de palier (4), le procédé comporte les étapes suivantes :
- sertir le support tubulaire (1) à l'aide d'un ou plusieurs outils de sertissage ;
- déterminer un contour intérieur (3), se formant sous l'effet du sertissage, du support tubulaire (1) ;
- calculer un contour extérieur (5), optimisé en termes de contraintes, du tourillon de palier (4) sur la base du contour intérieur (3) du support tubulaire (1) après le sertissage ;
- produire le tourillon de palier (4) de telle sorte qu'il comprend, déjà avant l'application du sertissage, un contour extérieur (5) qui est formé de manière correspondante au contour intérieur (3) du support tubulaire (1) serti, au moins dans une zone de chevauchement avec le sertissage ;
- pousser le support tubulaire (1) sur le tourillon de palier (4) ;
- sertir le support tubulaire (1).

13. Procédé selon la revendication 11, **caractérisé en ce qu'**au moins un espace libre de détente (6) est ménagé dans des zones de grandes contraintes qui peuvent survenir au niveau du contour extérieur (5) du tourillon de palier (4) en particulier dans la zone du contact de surface avec le contour intérieur (3) du support tubulaire (1).

14. Procédé selon la revendication 11 ou 12, **caractérisé en ce que** le sertissage s'effectue par le biais d'au moins deux outils de sertissage (2) réglables séparément, afin de pouvoir adapter le sertissage à une direction de sollicitation du palier d'essuie-glace.
